# EUROPÄISCHE PATENTSCHRIFT

(11) **EP 2 142 815 B1**
(45) Veröffentlichungstag und Bekanntmachung des Hinweises auf die Patenterteilung: **31.07.2019**
(21) Anmeldenummer: 08749138.7
(22) Anmeldetag: 25.04.2008
(51) Int. Cl.: F16C 33/46, F16C 33/54, F16C 33/66

(54) **AUS MEHREREN TEILEN ZUSAMMENGEBAUTER WÄLZLAGERKÄFIG**
ROLLING BEARING CAGE COMPOSED OF A PLURALITY OF PARTS
CAGE DE PALIER À ROULEMENT EN PLUSIEURS PARTIES

(30) Priorität: 28.04.2007 DE 102007020113
(43) Veröffentlichungstag der Anmeldung: 13.01.2010
(73) Patentinhaber: AB SKF, 415 50 Göteborg (SE)
(72) Erfinder: BEYFUSS, Berthold, 97535 Kaisten (DE); FRIEDRICH, Hans-Jürgen, 97486 Königsberg-Römershofer (DE); FUCHS, Fred, 97422 Schweinfurt (DE); RADINA, Alfred, 97711 Poppenlauer (DE); SCHIERLING, Jonas, 97437 Hassfurt (DE)
(74) Vertreter: Kohl, Thomas
(86) Internationale Anmeldenummer: PCT/EP2008/003359
(87) Internationale Veröffentlichungsnummer: WO 2008/131924

(56) Entgegenhaltungen:
- EP-A- 0 033 102
- EP-A- 1 876 365
- DE-C- 821 447
- DE-U- 6 606 962
- GB-A- 938 018
- JP-A- 6 117 440
- JP-A- 52 095 570
- US-A- 2 049 040
- US-A- 2 489 342
- US-A- 2 770 869

## Beschreibung

Die Erfindung betrifft einen Wälzlagerkäfig mit wenigstens U-förmig begrenzten Taschen für Wälzkörper.

Beispielsweise aus der DE 79 35 982 U1 ist ein Wälzlagerkäfig bekannt, der aus zwei Seitenteilen und einer Vielzahl von getrennt gefertigten und durch Schweißen oder dgl. mit den Seitenteilen verbundenen Stegteilen besteht, wobei die Stegteile zwischen sich Taschen zur Aufnahme der Wälzkörper bilden. Dabei sind die Seiten- und Stegteile aus flach- oder profilgewalztem Draht gefertigt und die Stegteile zur Bildung von Anlaufflächen für die Wälzkörper angeprägt.

Weiter ist aus der DE 66 06 962 U ein aus miteinander verschweißten Stegen und Seitenscheiben bestehender Fensterkäfig für ein Zylinderrollenlager bekannt. Am Innenumfang der beiden Seitenscheiben sind Aussparungen vorgesehen, in denen jeweils Vorsprünge der Stege eingreifen. Aus der US 2 489 342 A ist ein Kammkäfig für ein Kegelrollenlager bekannt, wobei die Stege durch Punktschweißen mit einer Seitenscheibe verbunden sind und mit am Außenumfang der Seitenscheibe angeordneten Ausnehmungen zusammenwirken. Aus der JP S52 095 570 A sowie der DE 821 447 C sind Fensterkäfige für Nadellager bekannt, wobei die Stege mit zwei Seitenscheiben bzw. zwei Seitenringen verbunden sind. Die Stege greifen dabei in Ausnehmungen am Außenumfang der beiden Seitenscheiben ein.

Eine Aufgabe der vorliegenden Erfindung ist es, einen verbesserten Wälzlagerkäfig mit wenigstens U-förmig begrenzten Taschen für Wälzkörper zu schaffen, der insbesondere präzise aber auch einfach und damit kostengünstig herstellbar ist.

Die Aufgabe wird durch den Gegenstand des Anspruchs 1 gelöst. Vorteilhafte Ausgestaltungen sind in den Unteransprüchen beschrieben.

Der Gegenstand der vorliegenden Erfindung beruht dabei auf der Erkenntnis, dass gegenüber dem eingangs beschriebenen Wälzlagerkäfig entsprechend der DE 79 35 982 U1 durch die besagte aufeinander abgestimmte Formgebung der Elemente bei einem entsprechenden Zusammensetzen der Elemente für das stoffschlüssige Verbinden der Elemente durch besagte Formgebung die Positionen der Stegelemente am Umfangselement in Umfangsrichtung und/oder in Achsrichtung des Umfangselements vorbestimmt sind, so dass als inhärente Folge besagter Formgebung die vorgegebene Geometrie des Käfigs exakt und einfach eingehalten wird. Dahingegen wird beim Wälzlagerkäfig gemäß der DE 79 35 982 U1 ein Inpositionbringen der miteinander zu verbindenden Teile nicht durch eine Formgebung der Teile unterstützt, so dass das Inpositionbringen im Rahmen des Verschweißungsvorgangs der Teile sichergestellt werden muss. Dahingegen ist bei der vorliegenden Erfindung besagter Prozess zum Verbinden der Elemente miteinander wenigstens teilweise entlastet, so dass gegenüber der DE 79 35 982 U1 der Käfig einfacher, schneller und damit kostengünstiger herstellbar ist. Weiterhin beruht die Erfindung auf der Erkenntnis, dass es für das Inpositionbringen der Elemente zueinander, nicht wie aus dem Stand der Technik bekannt, notwendig ist, das Umfangselement mit Höhlungen oder Durchdringungen auszubilden, in die entsprechend ausgebildete axiale Enden der Stegelemente zum Einsetzen vorgesehen sind. Dadurch, dass das Umfangselement gemäß der vorliegenden Erfindung frei von Höhlungen und Durchdringungen für ein vollumfängliches Verbinden mit Abschnitten der Stegelemente ist, ist das Umfangselement wiederum vergleichsweise einfach, schnell und damit kostengünstig herstellbar. Dabei reichen am Umfangselement Bauchungen in radialer Richtung aus, um mit Vorteil sowohl besagtes Inpositionbringen als auch eine ausreichend feste Verbindung zwischen den Elementen zu gewährleisten. Natürlich bietet dabei auch der Wälzlagerkäfig gemäß der vorliegenden Erfindung gegenüber Wälzlagerkäfigen, die aus einem hohlzylinderartigen Rohling herausgearbeitet werden, den Vorteil, dass kein Materialabfall durch ein Herausarbeiten insbesondere der Käfigtaschen entsteht und sich somit mit Vorteil eine Materialeinsparung gegenüber derartigen Verfahren ergibt.

In einer vorteilhaften Ausgestaltung sind das Umfangselement einerseits und die Stegelemente andererseits mit unterschiedlichen Eigenschaften ausgebildet. Damit ist es mit Vorteil möglich, verschiedene Werkstoffe zu paaren und beispielsweise je nach Anwendungsfall weniger belastete Elemente aus kostengünstigerem Material herzustellen. Weiterhin ist es auch möglich, eines der Elemente für eine hohe Verschleißfestigkeit aus einem wärmebehandelten Stahl auszubilden und andere Elemente, beispielsweise für eine hohe Zähigkeit, unbehandelt zu lassen.

In einer weiteren vorteilhaften Ausgestaltung ist es möglich, wenigstens eines der Elemente beschichtet auszubilden. Dabei ist es aufgrund der Zusammensetzung des Wälzlagerkäfigs aus Umfangs- und Stegelementen sehr viel einfacher und damit auch kostengünstiger nur die Beschichtung von einzelnen Elementen, beispielsweise den Stegelementen, vorzunehmen. Entsprechendes gilt für eine weitere vorteilhafte Ausgestaltung, bei der an den den Wälzkörpern zugewandten Flächen der Stegelemente beispielsweise tropfenförmig eingebrachte Prägungen in der Funktion als Schmiertaschen vorgesehen sind. Dabei können die Schmiertaschen in einer Ausbildungsform in einer linken axialen Hälfte des Stegelements schräg gemäß einer vom rechten Wälzlagerkäfigbereich schräg hin zum Wälzlagermittelpunkt hin verlaufenden Linie angeordnet und in der rechten Hälfte entsprechend spiegelbildlich ausgebildet sein.

Weitere Vorteile, Merkmale und Einzelheiten der Erfindung ergeben sich aus den im folgenden beschriebenen Ausführungsbeispielen der Erfindung anhand der Figuren. Dabei zeigen:
- Figuren 1 und 2: in perspektivischer Ansicht einen Zylinderrollenlagerkäfig mit zwei Umfangselementen mit Einbauchungen für Stegelemente mit einem einheitlichen trapezförmigen Querschnitt in einem unverbundenen und verbundenen Zustand der Elemente,
- Figuren 3 und 4: in perspektivischer Ansicht einen Zylinderrollenlagerkäfig mit zwei Umfangselementen mit Ausbauchungen für Stegelemente mit einem einheitlichen trapezförmigen Querschnitt in einem unverbundenen und verbundenen Zustand der Elemente,
- Figuren 5 und 6: in perspektivischer Ansicht einen Zylinderrollenlagerkäfig mit zwei Umfangselementen mit Einbauchungen für Stegelemente mit hammerkopfartig verstärkten axialen Enden in einem unverbundenen und verbundenen Zustand der Elemente,
- Figuren 7 und 8: in perspektivischer Ansicht einen nicht unter den Hauptanspruch fallenden Zylinderrollenlagerkäfig mit zwei ringartigen Umfangselementen mit stirnseitigen, rechteckigartigen Aussparungen für Stegelemente mit einem einheitlichen trapezförmigen Querschnitt in einem unverbundenen und verbundenen Zustand der Elemente,
- Figuren 9 und 10: in perspektivischer Ansicht einen nicht unter den Hauptanspruch fallenden Zylinderrollenlagerkäfig mit zwei ringartigen Umfangselementen mit stirnseitigen, rechteckigartigen Aussparungen für Stegelemente mit hammerkopfartig verstärkten axialen Enden in einem unverbundenen und verbundenen Zustand der Elemente,
- Figuren 11 und 12: in perspektivischer Ansicht einen nicht unter den Hauptanspruch fallenden Zylinderrollenlagerkäfig mit zwei ringartigen Umfangselementen mit stirnseitigen, sich axial nach innen verjüngenden, trapezförmigen Aussparungen für Stegelemente mit entsprechend trapezförmig verdickten axialen Enden in einem unverbundenen und verbundenen Zustand der Elemente,
- Figuren 13 und 14: in perspektivischer Ansicht einen nicht unter den Hauptanspruch fallenden Zylinderrollenlagerkäfig mit zwei ringartigen Umfangselementen und mit Stegelementen, deren Innenseiten an den axialen Enden jeweils mit einem Absatz zum Anliegen an einer Außenkante der Umfangselemente ausgebildet sind, in einem unverbundenen und verbundenen Zustand der Elemente,
- Figuren 15 und 16: in perspektivischer Ansicht einen nicht unter den Hauptanspruch fallenden Zylinderrollenlagerkäfig mit zwei ringartigen Umfangselementen und mit Stegelementen, deren Außenseiten an den axialen Enden jeweils mit einem Absatz zum Anliegen an einer Innenkante der Umfangselemente ausgebildet sind, in einem unverbundenen und verbundenen Zustand der Elemente,
- Figur 17: in perspektivischer Ansicht einen Zylinderrollenlagerkäfig entsprechend dem der Figur 2 mit zusätzlichen Schmiertaschen in den Stegelementen,
- Figur 18: in perspektivischer Ansicht eines der Stegelemente der Figur 17 und
- Figuren 19 und 20: in perspektivischer Ansicht einen Kegelrollenlagerkäfig mit zwei Umfangselementen mit Einbauchungen für Stegelemente mit einem einheitlichen trapezförmigen Querschnitt in einem unverbundenen und verbundenen Zustand der Elemente.

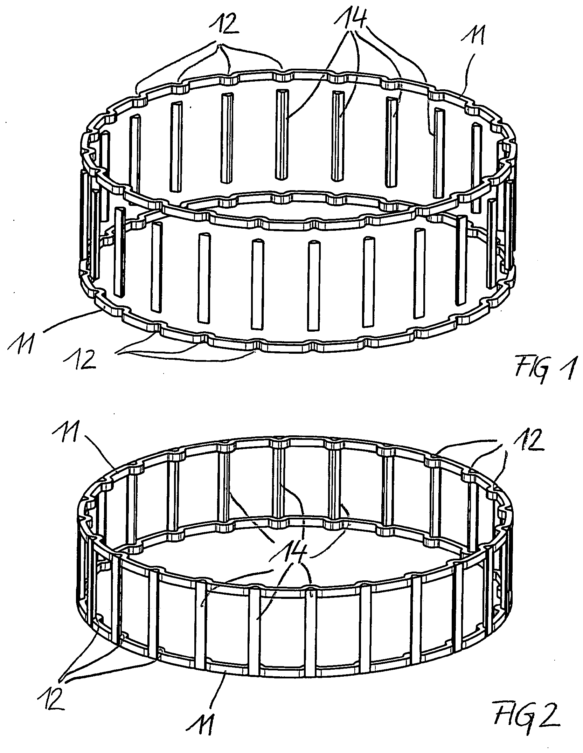

Die Figuren 1 und 2 zeigen als ein Ausführungsbeispiel der Erfindung in perspektivischer Ansicht einen Zylinderrollenlagerkäfig mit zwei Umfangselementen 11 mit Einbauchungen 12 für Stegelemente 14 mit einem einheitlichen trapezförmigen Querschnitt. Dabei zeigt die Figur 1 den Käfig in einem noch unverbundenen Zustand der Elemente 11 und 14 und die Figur 2 den Käfig nach einem Verbinden der Elemente 11 und 14. Dabei sorgen die Einbauchungen 12 an den Umfangselementen 11 in Verbindung mit den entsprechend den Einbauchungen 12 geformten Stegelementen 14 beim Zusammensetzen der Elemente 11 und 14 für eine Verschweißen der Stegelemente 14 an den Umfangselementen 11 für ein Vorpositionieren der Stegelemente 14 in Umfangsrichtung der Umfangselemente 11.

Dabei sind die Elemente 11 und 14 aus einem Eisenwerkstoff, insbesondere aus einem Stahldraht hergestellt. In anderen Ausführungsformen können aber auch andere Materialien zum Einsatz kommen und anstelle eines Verschweißens auch ein Löten oder Kleben treten. Weiterhin können insbesondere auch die Stegelemente 14 zum Erzielen eines besonderen Gleitverhaltens, insbesondere im Bereich ihrer Kontaktflächen hin zu den Wälzkörpern, mit einer Beschichtung ausgebildet sein.

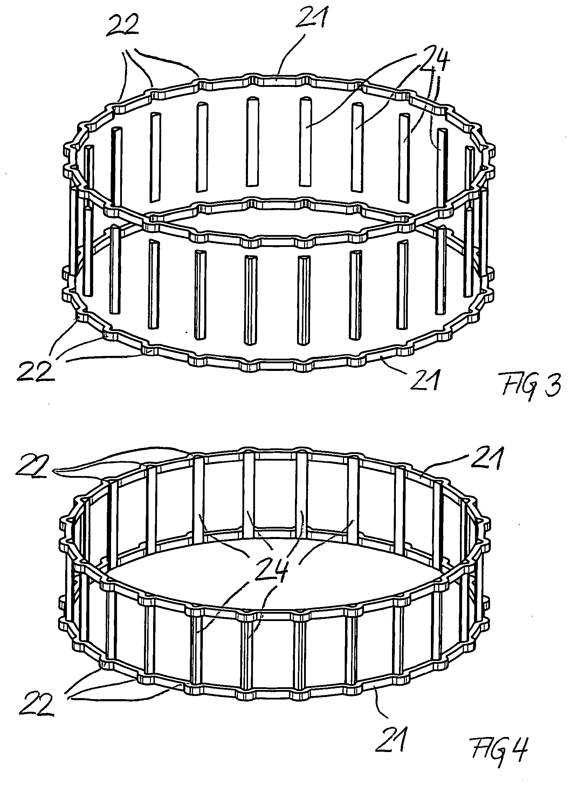

Die Figuren 3 und 4 zeigen als ein weiteres Ausführungsbeispiel der Erfindung in perspektivischer Ansicht einen Zylinderrollenlagerkäfig mit zwei Umfangselementen 21 mit Ausbauchungen 22 für Stegelemente 24 mit einem einheitlichen trapezförmigen Querschnitt. Dabei zeigt die Figur 3 den Käfig in einem noch unverbundenen Zustand der Elemente 21 und 24 und die Figur 4 den Käfig nach einem Verbinden der Elemente 21 und 24. Ansonsten gilt das vorausgehend zu den Figuren 1 und 2 Beschriebene für den Käfig der Figuren 3 und 4 entsprechend.

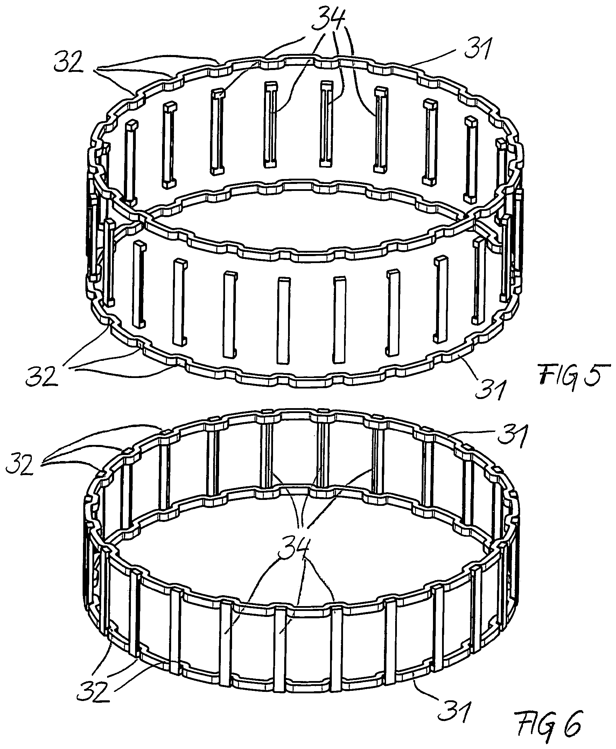

Die Figuren 5 und 6 zeigen als ein weiteres Ausführungsbeispiel der Erfindung in perspektivischer Ansicht einen Zylinderrollenlagerkäfig mit zwei Umfangselementen 31 mit Einbauchungen 32 für Stegelemente 34 mit hammerkopfartig verstärkten axialen Enden. Dabei zeigt die Figur 5 den Käfig in einem noch unverbundenen Zustand der Elemente 31 und 34 und die Figur 6 den Käfig nach einem Verbinden der Elemente 31 und 34. Dabei unterscheidet sich der Käfig der Figuren 5 und 6 von dem der Figuren 1 und 2 im wesentlichen dadurch, dass die Stegelemente 34 an ihren axialen Enden hammerkopfartig verstärkt sind und auch die Einbauchungen 32 daran angepasst entsprechend breiter ausgebildet sind, womit eine besonders große Verbindungsfläche zwischen den Stegelementen 34 und den Umfangselementen 31 und damit eine besonders feste Verbindung und steife Ausbildung des gesamten Käfigs erzielbar ist. Ansonsten gilt das vorausgehend zu den Figuren 1 bis 4 Beschriebene entsprechend.

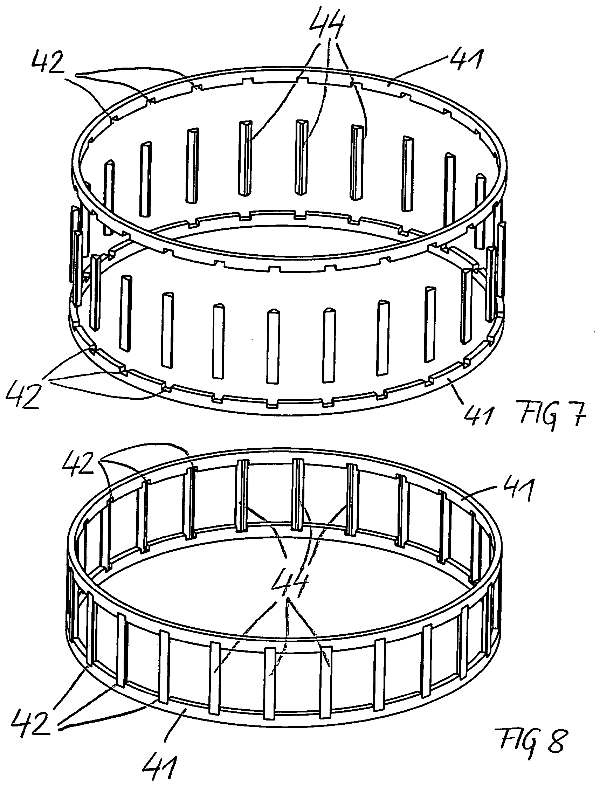

Die Figuren 7 und 8 zeigen in perspektivischer Ansicht einen Zylinderrollenlagerkäfig mit zwei ringartigen Umfangselementen 41 mit stirnseitigen, rechteckartigen Aussparungen 42 für Stegelemente 44 mit einem einheitlichen trapezförmigen Querschnitt. Dabei zeigt die Figur 7 den Käfig in einem noch unverbundenen Zustand der Elemente 41 und 44 und die Figur 8 den Käfig nach einem Verbinden der Elemente 41 und 44. Dabei sorgen die Aussparungen 42 in den Umfangselementen 41 beim Einsetzen der Stegelemente 44 in die Umfangselemente 41 für ein Verschweißen der Elemente 41 und 44 miteinander, für ein Vorpositionieren der Stegelemente 44 in Umfangsrichtung, aber auch in Achsrichtung der Umfangselemente 41. Anders als bei den Käfigen gemäß den Figuren 1 bis 6 ist damit beim Käfig gemäß der Figuren 7 und 8, da die Stegelemente 44 sozusagen zwischen den Umfangselementen 41 eingesetzt sind, auch der Abstand zwischen den beiden Umfangselementen 41 mit festgelegt. Ansonsten gilt das vorausgehend zu den Figuren 1 bis 6 Beschriebene entsprechend.

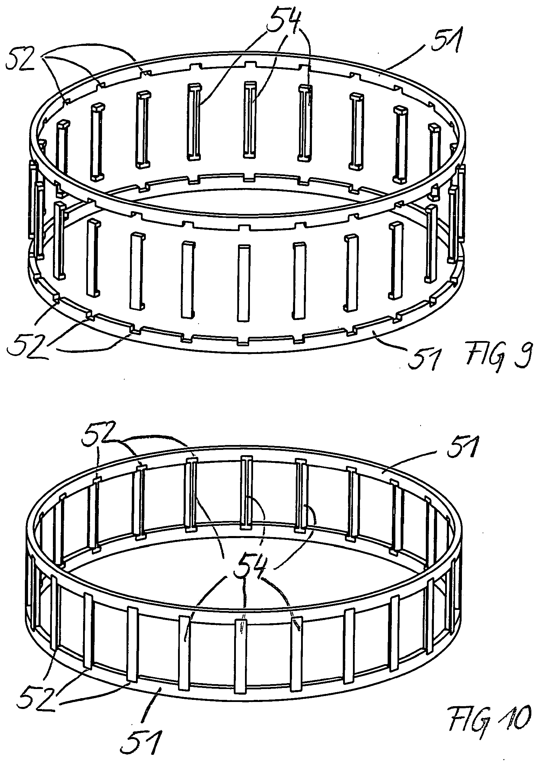

Die Figuren 9 und 10 zeigen in perspektivischer Ansicht einen Zylinderrollenlagerkäfig mit zwei ringartigen Umfangselementen 51 mit stirnseitigen, rechteckartigen Aussparungen 52 für Stegelemente 54 mit hammerkopfartig verstärkten axialen Enden. Dabei zeigt die Figur 9 den Käfig in einem noch unverbundenen Zustand der Elemente 51 und 54 und die Figur 10 den Käfig nach einem Verbinden der Elemente 51 und 54. Gegenüber dem Käfig der Figuren 7 und 8 unterscheidet sich der Käfig gemäß den Figuren 9 und 10 im wesentlichen durch die hammerkopfartigen Verstärkungen an den axialen Enden der Stegelemente 54. Ansonsten gilt das vorausgehend zu den Figuren 7 und 8 Beschriebene entsprechend.

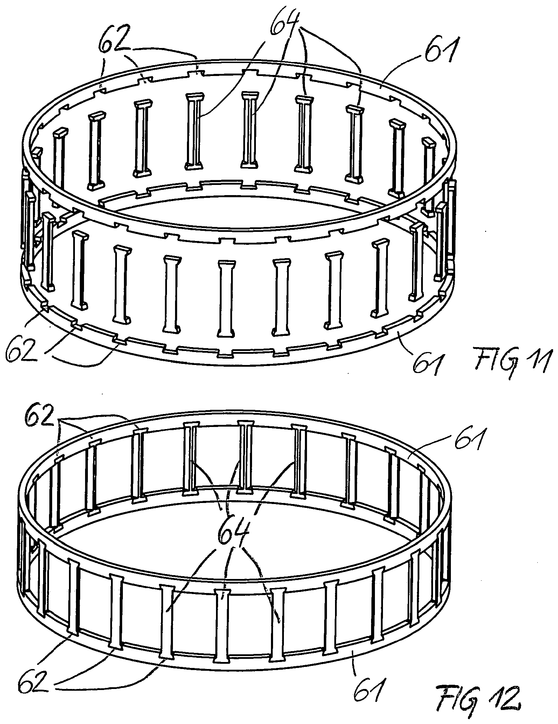

Die Figuren 11 und 12 zeigen in perspektivischer Ansicht einen Zylinderrollenlagerkäfig mit zwei ringartigen Umfangselementen 61 mit stirnseitigen, sich axial nach innen verjüngenden, trapezförmigen Aussparungen 62 für Stegelemente 64 mit entsprechend trapezförmig verdickten axialen Enden. Dabei zeigt die Figur 11 den Käfig in einem noch unverbauten Zustand der Elemente 61 und 64 und die Figur 12 den Käfig nach einem Verbinden der Elemente 61 und 64. Gegenüber dem Käfig der Figuren 9 und 10 unterscheidet sich der Käfig der Figuren 11 und 12 im wesentlichen dadurch, dass die Aussparungen 62 wie auch die hammerkopfartig verdickten Enden der Stegelemente 64 zusätzlich, in Umfangsrichtung gesehen, trapezförmig ausgebildet sind, wodurch mit besonderem Vorteil nach einem Zusammensetzen der Elemente 61 und 64 die Elemente 61 und 64 in Achsrichtung aufgrund des Formschlusses zwischen den axialen Enden der Stegelemente 64 und den Umfangselementen 61 fest zusammenhalten. Nach einem Verschweißen der Elemente 61 und 64 miteinander ergibt sich mit Vorteil ein besonders festgefügter Zylinderrollenlagerkäfig.

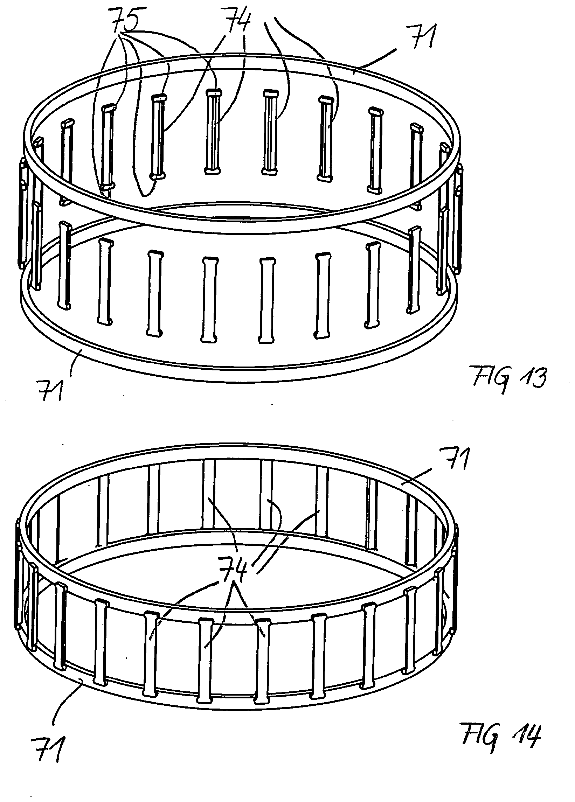

Die Figuren 13 und 14 zeigen in perspektivischer Ansicht einen Zylinderrollenlagerkäfig mit zwei ringartigen Umfangselementen 71 und mit Stegelementen 74, deren Innenseite an den axialen Enden jeweils mit einem Absatz 75 zum Anliegen an einer Außenkante der Umfangselemente 71 ausgebildet sind. Dabei zeigt die Figur 13 den Käfig in einem noch unverbundenen Zustand der Elemente 71 und 74 und die Figur 14 den Käfig nach einem Verbinden der Elemente 71 und 74. Bei dem Käfig gemäß der Figuren 13 bis 14 sind die Elemente 71 und 74 nur derart geformt, dass die Position der Stegelemente 74 in Achsrichtung der Umfangselemente 71 vorbestimmt ist und somit lediglich der Abstand der beiden Umfangselemente 71 zueinander festgelegt ist, wohingegen die richtige Verteilung der Stegelemente 74 in Umfangsrichtung durch externe Maßnahmen, beispielsweise beim Verbinden der Elemente 71 und 74, sichergestellt werden muss.

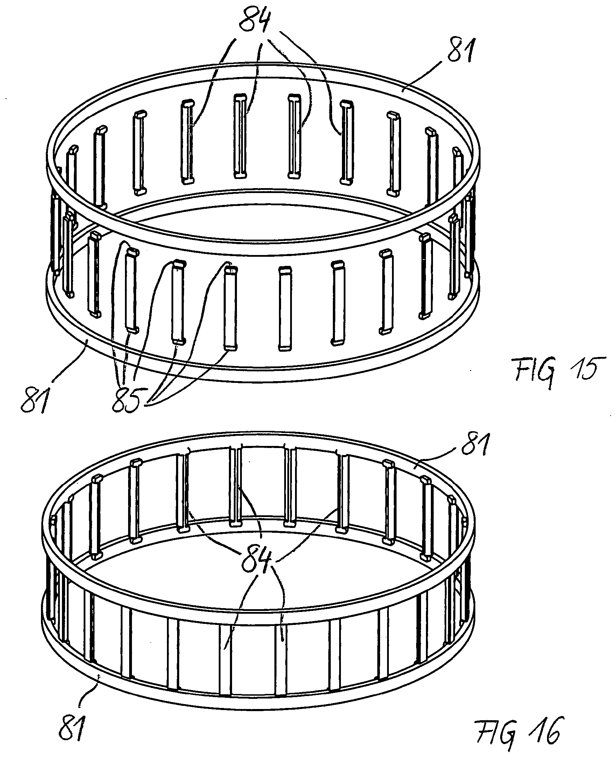

Die Figuren 15 und 16 zeigen in perspektivischer Ansicht einen Zylinderrollenlagerkäfig mit zwei ringartigen Umfangselementen 81 und mit Stegelementen 84, deren Außenseite nunmehr an den axialen Enden jeweils mit einem Absatz 85 zum Anliegen an einer Innenkante der Umfangselemente 81 ausgebildet sind. Dabei zeigt die Figur 15 den Käfig wiederum in einem noch unverbundenen Zustand der Elemente 81 und 84 und die Figur 16 den Käfig nach einem Verbinden der Elemente 81 und 84. Ansonsten gilt das vorausgehend zu den Figuren 13 und 14 Ausgeführte entsprechend.

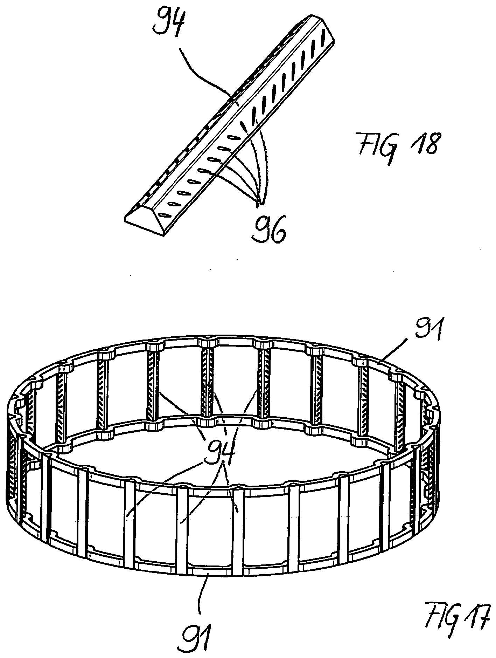

Die Figur 17 zeigt als ein weiteres Ausführungsbeispiel der Erfindung in perspektivischer Ansicht einen Zylinderrollenlagerkäfig mit zwei Umfangselementen 91 mit Einbauchungen für Stegelemente 94 mit Schmiertaschen 96. Abgesehen von den Schmiertaschen 96 entspricht dabei der Käfig der Figur 17 dem der Figur 2. Die Figur 18 zeigt eine vergrößerte perspektivische Darstellung eines der Stegelemente 94 mit den Schmiertaschen 96. Die Schmiertaschen 96 sind dabei in einer linken axialen Hälfte der Stegelemente 94 schräg, parallel zu einer vom rechten Käfigbereich schräg zum Käfigmittelpunkt hin verlaufenden Linie angeordnet, in der rechten Hälfte entsprechend spiegelbildlich ausgebildet und in der Mitte ist eine Schmiertasche 96 radial orientiert. Dabei sind die Schmiertaschen 96 tropfenförmig ausgebildet.

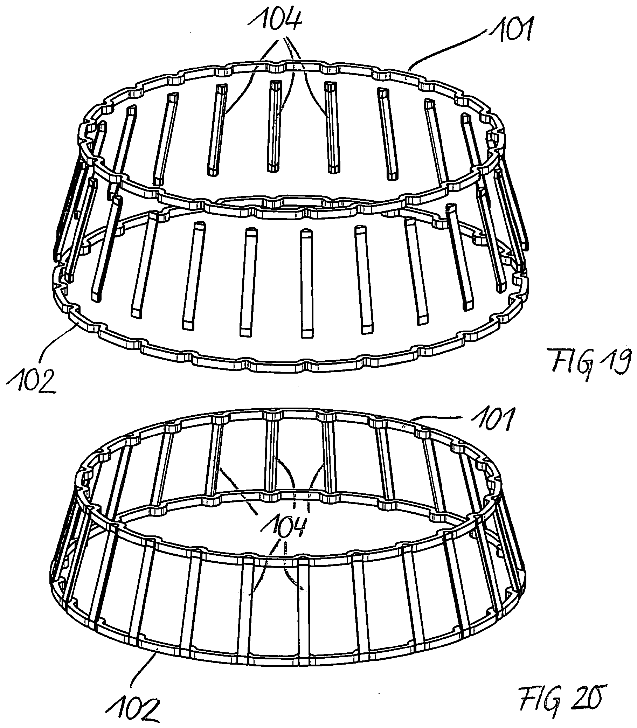

Die Figuren 19 und 20 zeigen als ein Ausführungsbeispiel der Erfindung in perspektivischer Ansicht einen Kegelrollenlagerkäfig mit zwei Umfangselementen 101 und 102 mit Einbauchungen für Stegelemente 104 mit einem einheitlichen trapezförmigen Querschnitt. Dabei zeigt die Figur 19 den Käfig in einem noch unverbundenen Zustand der Elemente 101, 102 und 104 und die Figur 20 den Käfig nach einem Verbinden der Elemente 101, 102 und 104. Abgesehen davon, dass beim Käfig der Figuren 19 und 20 die beiden Umfangselemente 101 und 102 mit unterschiedlichen Durchmessern ausgebildet sind und die Stegelemente 104 im Übergang von ihren axialen Enden hin zu ihrem Mittenbereich abgewinkelt ausgebildet sind, entspricht der Käfig der Figuren 19 und 20 dem der Figuren 1 und 2. Dabei gilt das übrige zu den Figuren 1 und 2 Beschriebene für den Käfig der Figuren 19 und 20 entsprechend. Natürlich ist dabei auch das übrige zu den Figuren 3 bis 18 Ausgeführte auf einen entsprechend ausgebildeten Kegelrollenlagerkäfig übertragbar.

Schließlich ist das vorausgehend zu den Figuren 1 bis 20 am Beispiel von Fensterkäfigen für ein einreihiges Zylinder- bzw. Kegelrollenradiallager Beschriebene auch auf andere Rollenlager, beispielsweise sphärische Lager, CARB-Lager und auch Tonnenlager, aber auch auf Lager mit kammartigen Käfigen, auf Rollenlager mit mehreren Rollenreihen und auch auf Axiallager übertragbar.

## Patentansprüche

1. Wälzlagerkäfig mit wenigstens U-förmig begrenzten Taschen für Wälzkörper, beinhaltend folgende Merkmale:
- Die U-förmige Begrenzung einer der Taschen ist durch das stoffschlüssige Verbinden zweier Stegelemente (14, 24, 34, 94, 104) an einem ringartigen Umfangselement (11, 21, 31, 91, 101, 102) ausgebildet,
- das Umfangselement (11, 21, 31, 91, 101, 102) ist frei von Höhlungen und Durchdringungen für ein vollumfängliches Verbinden mit Abschnitten der Stegelemente (14, 24, 34, 94, 104) und
- für ein bestimmungsgemäßes Inpositionbringen der Elemente zueinander für das stoffschlüssige Verbinden sind die Elemente derart mit einer aufeinander abgestimmten Formgebung ausgebildet, dass die Positionen der Stegelemente (14, 24, 34, 94, 104) am Umfangselement (11, 21, 31, 91, 101, 102) in Umfangsrichtung vorbestimmt sind, indem das Umfangselement (11, 21, 31, 91, 101, 102) in Umfangsrichtung mit in radialer Richtung ausgebildeten Bauchungen (12, 22, 32) gestaltet ist.

2. Wälzlagerkäfig nach Anspruch 1, wobei das Umfangselement in Umfangsrichtung an einer seiner Stirnseiten mit sich in Achsrichtung erstreckenden Aussparungen ausgebildet ist.

3. Wälzlagerkäfig nach Anspruch 1 oder 2, wobei die Bauchungen (12, 22, 32) oder Aussparungen in Umfangsrichtung gesehen rechteckförmig oder trapezförmig ausgebildet sind.

4. Wälzlagerkäfig nach einem der Ansprüche 1 bis 3, wobei die Stegelemente mit in die Bauchungen oder Aussparungen passenden axialen Endbereichen ausgebildet sind.

5. Wälzlagerkäfig nach einem der Ansprüche 1 bis 4, wobei für das Positionieren die Stegelemente an wenigstens einem ihrer axialen Enden in Achsrichtung einen Absatz ausbildend gestaltet sind, der an einem Kantenbereich des Umfangselements zum Anschlagen vorgesehen ist.

6. Wälzlagerkäfig nach einem der Ansprüche 1 bis 5, wobei das stoffschlüssige Verbinden ein Verlöten oder Verkleben umfasst und/oder die Elemente einen Eisenwerkstoff und das stoffschlüssige Verbinden ein Verschweißen umfassen.

7. Wälzlagerkäfig nach einem der Ansprüche 1 bis 6, wobei das Umfangselement (11, 21, 31, 91, 101, 102) einerseits und die Stegelemente (14, 24, 34, 94, 104) andererseits mit unterschiedlichen Eigenschaften ausgebildet sind.

8. Wälzlagerkäfig nach einem der Ansprüche 1 bis 7, wobei wenigstens eines der Elemente wenigstens in Teilbereichen beschichtet ausgebildet ist.

9. Wälzlagerkäfig nach einem der Ansprüche 1 bis 7, wobei wenigstens eines der Stegelemente (94) an seinen zum Berühren der Wälzkörper vorgesehenen Flächen mit Schmiertaschen (96) ausgebildet ist.

10. Wälzlagerkäfig nach einem der Ansprüche 1 bis 9, wobei eine Querschnittsfläche wenigstens eines Abschnitts eines der Stegelemente trapezförmig ist.

11. Wälzlagerkäfig nach einem der Ansprüche 1 bis 10, wobei das Umfangselement in sich geschlossen oder offen ausgebildet ist.

12. Wälzlagerkäfig nach einem der Ansprüche 1 bis 11, wobei an beiden axialen Enden der Stegelemente (14, 24, 34, 94, 104) jeweils ein ringartiges Umfangselement (11, 21, 31, 91, 101, 102) angeordnet ist.

13. Wälzlagerkäfig nach einem der Ansprüche 1 bis 12, wobei sich axial an beide Stirnseiten des Umfangselements durch Stegelemente ausgebildete, wenigstens U-förmig begrenzte Taschen anschließen.

14. Wälzlagerkäfig nach einem der Ansprüche 1 bis 13, wobei der Wälzlagerkäfig als ein Rollenlagerkäfig ausgebildet ist.

## Claims

1. Anti-friction bearing cage having pockets for rolling bodies, which pockets are delimited at least in a U-shape, comprising the following features:
- the U-shaped delimitation of one of the pockets is configured by way of the integrally joined connection of two web elements (14, 24, 34, 94, 104) on a ring-like circumferential element (11, 21, 31, 91, 101, 102),
- the circumferential element (11, 21, 31, 91, 101, 102) is free from cavities and penetrations for a fully circumferential connection to sections of the web elements (14, 24, 34, 94, 104), and,
- for proper positioning of the elements with respect to one another for the integrally joined connection, the elements are configured with a shape which is matched to one another in such a way that the positions of the web elements (14, 24, 34, 94, 104) on the circumferential element (11, 21, 31, 91, 101, 102) are predetermined in the circumferential direction, by the circumferential element (11, 21, 31, 91, 101, 102) being designed in the circumferential direction with bulged portions (12, 22, 32) which are configured in the radial direction.

2. Anti-friction bearing cage according to Claim 1, the circumferential element being configured in the circumferential direction on one of its end sides with cut-outs which extend in the axial direction.

3. Anti-friction bearing cage according to Claim 1 or 2, the bulged portions (12, 22, 32) or cut-outs being of rectangular or trapezoidal configuration as viewed in the circumferential direction.

4. Anti-friction bearing cage according to one of Claims 1 to 3, the web elements being configured with axial end regions which fit into the bulged portions or cut-outs.

5. Anti-friction bearing cage according to one of Claims 1 to 4, the web elements being designed at at least one of their axial ends so as to configure a shoulder in the axial direction for the positioning, which shoulder is provided for bearing against an edge region of the circumferential element.

6. Anti-friction bearing cage according to one of Claims 1 to 5, the integrally joined connection comprising soldering or adhesive bonding, and/or the elements comprising an iron material and the integrally joined connection comprising welding.

7. Anti-friction bearing cage according to one of Claims 1 to 6, the circumferential element (11, 21, 31, 91, 101, 102) on one side and the web elements (14, 24, 34, 94, 104) on the other side being configured with different properties.

8. Anti-friction bearing cage according to one of Claims 1 to 7, at least one of the elements being of coated configuration at least in part regions.

9. Anti-friction bearing cage according to one of Claims 1 to 7, at least one of the web elements (94) being configured with the lubricating pockets (96) on its surfaces which are provided for contact of the rolling bearings.

10. Anti-friction bearing cage according to one of Claims 1 to 9, a cross-sectional area of at least one section of one of the web elements being trapezoidal.

11. Anti-friction bearing cage according to one of Claims 1 to 10, the circumferential element being of inherently closed or open configuration.

12. Anti-friction bearing cage according to one of Claims 1 to 11, in each case one ring-like circumferential element (11, 21, 31, 91, 101, 102) being arranged at the two axial ends of the web elements (14, 24, 34, 94, 104).

13. Anti-friction bearing cage according to one of Claims 1 to 12, the two end sides of the circumferential element being adjoined axially by pockets which are configured by way of web elements and are delimited at least in a U-shaped manner.

14. Anti-friction bearing cage according to one of Claims 1 to 13, the anti-friction bearing cage being configured as a roller bearing cage.

## Revendications

1. Cage de palier à roulement, comprenant au moins des cavités limitées en forme de U pour des corps de roulement, comprenant les caractéristiques suivantes :
- la limitation en forme de U de l'une des cavités est réalisée par l'engagement par liaison de matière de deux éléments de nervure (14, 24, 34, 94, 104) avec un élément périphérique annulaire (11, 21, 31, 91, 101, 102),
- l'élément périphérique (11, 21, 31, 91, 101, 102) est exempt de trous et de perçages en vue d'une liaison sur toute sa surface avec des portions des éléments de nervure (14, 24, 34, 94, 104) et
- en vue d'un positionnement conforme des éléments les uns par rapport aux autres pour l'engagement par liaison de matière, les éléments sont réalisés avec une forme qui leur permet d'être adaptés les uns aux autres de telle sorte que les positions des éléments de nervure (14, 24, 34, 94, 104) sur l'élément périphérique (11, 21, 31, 91, 101, 102) dans la direction périphérique soient prédéterminées par le fait que l'élément périphérique (11, 21, 31, 91, 101, 102) est configuré dans la direction périphérique avec des bombements (12, 22, 32) réalisés dans la direction radiale.

2. Cage de palier à roulement selon la revendication 1, dans laquelle l'élément périphérique est réalisé dans la direction périphérique au niveau de l'un de ses côtés frontaux avec des évidements s'étendant dans la direction axiale.

3. Cage de palier à roulement selon la revendication 1 ou 2, dans laquelle les bombements (12, 22, 32) ou les évidements, vu dans la direction périphérique, sont réalisés sous forme rectangulaire ou trapézoïdale.

4. Cage de palier à roulement selon l'une quelconque des revendications 1 à 3, dans laquelle les éléments de nervure sont réalisés avec des régions d'extrémité axiales s'adaptant dans les bombements ou dans les évidements.

5. Cage de palier à roulement selon l'une quelconque des revendications 1 à 4, dans laquelle, pour le positionnement, les éléments de nervure sont réalisés en formant un épaulement au niveau d'au moins l'une de leurs extrémités axiales dans la direction axiale, lequel est prévu pour buter contre une région de bord de l'élément périphérique.

6. Cage de palier à roulement selon l'une quelconque des revendications 1 à 5, dans laquelle l'engagement par liaison de matière comprend un brasage ou un collage et/ou les éléments comprennent un matériau ferreux et l'engagement par liaison de matière comprend un soudage.

7. Cage de palier à roulement selon l'une quelconque des revendications 1 à 6, dans laquelle l'élément périphérique (11, 21, 31, 91, 101, 102) d'une part, et les éléments de nervure (14, 24, 34, 94, 104) d'autre part sont réalisés avec des propriétés différentes.

8. Cage de palier à roulement selon l'une quelconque des revendications 1 à 7, dans laquelle au moins l'un des éléments est réalisé sous forme revêtue au moins dans des régions partielles.

9. Cage de palier à roulement selon l'une quelconque des revendications 1 à 7, dans laquelle au moins l'un des éléments de nervure (94) est réalisé au niveau de ses surfaces prévues pour venir en contact avec les corps de roulement avec des cavités de lubrification (96).

10. Cage de palier à roulement selon l'une quelconque des revendications 1 à 9, dans laquelle une surface en section transversale d'au moins une portion de l'un des éléments de nervure est trapézoïdale.

11. Cage de palier à roulement selon l'une quelconque des revendications 1 à 10, dans laquelle l'élément périphérique est réalisé sous forme ouverte ou fermée en soi.

12. Cage de palier à roulement selon l'une quelconque des revendications 1 à 11, dans laquelle un élément périphérique annulaire (11, 21, 31, 91, 101, 102) est disposé à chaque fois au niveau des deux extrémités axiales des éléments de nervure (14, 24, 34, 94, 104).

13. Cage de palier à roulement selon l'une quelconque des revendications 1 à 12, dans laquelle au moins des cavités limitées en forme de U, réalisées par des éléments de nervure, se raccordent axialement aux deux côtés frontaux de l'élément périphérique.

14. Cage de palier à roulement selon l'une quelconque des revendications 1 à 13, la cage de palier à roulement étant réalisée sous forme de cage de palier à rouleaux.
